# EUROPEAN PATENT SPECIFICATION

(11) **EP 1 680 211 B1**
(45) Date of publication and mention of the grant of the patent: **09.07.2014**
(21) Application number: 04761327.8
(22) Date of filing: 22.09.2004
(51) Int. Cl.: B01D 65/02, B01D 65/06, B01D 63/02

(54) **BACKWASH AND CLEANING METHOD**
RÜCKSPÜLUNGS- UND REINIGUNGSVERFAHREN
PROCEDE DE NETTOYAGE ET DE LAVAGE A CONTRE-COURANT

(30) Priority: 22.09.2003 AU 2003905174
(43) Date of publication of application: 19.07.2006
(73) Proprietor: Evoqua Water Technologies LLC, Alpharetta, GA 30022 (US)
(72) Inventor: JOHNSON, Warren, Thomas, Grose Vale, NSW 2753 (AU)
(74) Representative: Fyfe, Fiona Allison Watson
(86) International application number: PCT/AU2004/001292
(87) International publication number: WO 2005/028086

(56) References cited:
- WO-A1-93/02779
- GB-A- 2 120 952
- JP-A- 11 076 769
- US-A- 4 767 539
- US-A- 4 931 186
- US-A- 4 935 143
- DATABASE WPI Week 199811 Derwent Publications Ltd., London, GB; AN 1998-113919 XP002449395 & JP 10 000464 A (MITSUBISHI JUKOGYO KK) 6 January 1998 (1998-01-06)
- DATABASE WPI Week 199815, Derwent Publications Ltd., London, GB; Class J01, AN 1998-162733, XP003019013 & JP 10 028 845 A (KANEBUCHI KAGAKU KOGYO KK) 03 February 1998
- DATABASE WPI Week 198511, Derwent Publications Ltd., London, GB; Class J01, AN 1985-064514, XP003019014 & JP 60 019 002 A (NIPPON GENSHIRYOKU JUIGYO) 31 January 1985

## Description

The present invention relates to a method of concentrating the solids of a liquid suspension by means of permeable hollow membranes, and, in particular, to an improved method of backwashing and chemically cleaning the hollow fibre membrane.

JP-A-11-76769 discloses a cleaning method for a filter membrane module including the step of pressing a liquid chemical agent with a gas from the permeation side through the filter membrane after the membrane has been immersed in water.

US-S-4,931,186 describes a method of concentrating solids in a liquid suspension using a filter having a plurality of hollow, microporous, elastic fibres. The concentrating method includes a cleaning step which comprises stretching the fibre pores of the membrane and washing out solids retained in the pores by the application of gas under pressure.

JP-A-10-000464 describes a reverse osmosis desalination apparatus and a method for cleaning it. The cleaning method includes the step of periodically supplying air from the permeate side to the reverse osmosis membrane for removing solid particles adhered thereto.

US 4935143 describes a method for cleaning of filters including a gaseous backwash cycle in which pressurised gas is introduced through the lumens of hollow microporous fibres and passes through the wall of the fibres to dislodge solids retained in or on the fibre walls. The gaseous cleaning step is enhanced by varying the pressure within the housing of the filter while the gas is being introduced into the filter.

US-A-4,935,143 A1 describes a microporous filter assembly wherein feed pressure is fed to the external walls of the microporous fibres comprising the filter. Also disclosed are various forms of backwashing of the fibres. These backwash methods include terminating the supply of feed to the exterior surface of the fibres and removing the remaining filtrate from the lumens of the fibres.

US 4,767,539 discloses a method of cleaning a filter having a plurality of porous hollow fibres contained within a housing. The filtration method includes the step of applying a liquid suspension feedstock to the outer surfaces of the fibres so that a portion of the feedstock passes through the walls of the fibres to be drawn from the fibre as a filtrate. During this process, some of the feedstock is retained in the pores of the fibres. This retained feedstock is dislodged by introducing a pressurised gas into the fibres that passes through the fibre walls.

GB 2,120,952 discloses a process for filtering a suspension using an aggregate of porous hollow fibre membranes contained in a filter vessel. This process includes backwashing the membrane filters with a gas to clean it and repeating the filtration and backwashing process alternately.

JP 10028845 discloses a filtering device including a plurality of hollow fibre membrane cartridge filters contained in a housing. A backwashing method is carried out on the hollow fibre membranes by air of which the pressure is equal to or more than the bubble point of the hollow fibre membranes in the direction reverse to a filtering direction.

Any discussion of the prior art throughout the specification should in no way be considered as an admission that such prior art is widely known or forms part of the common general knowledge in the field.

Known backwash systems include those described in our earlier International Application no. WO93/02779.

A pressurized liquid backwash of hollow fibre membranes has been found to be uneven along the length of the fibre membranes due to the frictional losses along the lumen. In membranes with the fibres closed at one end, the pressure of liquid is highest at the point of application of the pressurized flow to the fibres lumens and tapering off along the length of the membrane. This results in uneven backwashing and poor recovery of TMP at portions of the fibres remote from the backwash application point. In fibres open at both ends, the backwash flow is a minimum towards the centre of the fibre.

During chemical cleaning of membranes, cleaning solutions are often backflushed from the lumen side of the membrane to distribute the cleaning solution within the membrane fibre bundle. Applying the cleaning solution under pressure assists the removal of foulants from the surface. However, the limitations of pressure drop down the lumen during this step mean that achieving the same applied transmembrane pressure (TMP) to all areas of the membrane cannot be readily achieved, especially for small diameter fibres where the pressure loss is greatest. This impacts on the efficiency of cleaning.

It is an object of the invention to overcome or at least ameliorate one or more of the disadvantages of the prior art or at least provide a useful alternative.

According to a first aspect of the invention there is provided a method as recited in claim 1.

The backwash includes use of clean-in-place (CIP) chemical solutions instead of the filtrate. This may be employed in a number of different backwash methods.

The backwash method includes filtering the chemical cleaning solution from the shell side, that is, from the outer surface or vessel side of the membrane into the membrane lumens. The normal backwash is then performed and the chemical solution forced back through the membrane pores in an even fashion by applying a gas as described above.

One form of the chemical backwash includes applying chemical cleaning solution under pressure to the outer side of the membranes to force chemical cleaning solution through the membrane pores and fill the membrane lumens with the chemical cleaning solution. This is followed by the normal gas backwash described above.

In order to minimise the volume of chemical cleaning solution used all (or most) of the liquid in the system may be removed or drained from one side of the membrane, typically the filtrate side (or inside of the hollow membrane), then the outer side of the membrane is at least partially filled with chemical cleaning solution and a vacuum (or reduced pressure) applied to the filtrate side to cause the chemical cleaning solution to be drawn from the outer side of the membrane to the filtrate side, then gas pressure is applied to the filtrate side to force the chemical cleaning solution in the reverse direction from the filtrate side through the membrane wall back to the outer side of the membrane.

In another method, the filtrate side of the membrane(s) is drained or emptied of liquid and liquid on the outer side of the membranes is also partially drained or emptied. The outer side of the membrane lumen is then at least partially filled chemical cleaning solution. The chemical cleaning solution applied to the outer side of the membranes is then pushed through with gas (for a pressurized system) or drawn through under suction (for a submerged non-pressurized system) to fill the lumen with chemical cleaning solution and the volume of chemical cleaning solution used is less than the hold-up volume of liquid on the outer side of the membranes. Only enough volume of chemical cleaning solution on the outer side of the membranes to fill the membrane lumens is required. Pressure can then be applied to the lumen side to drain the chemical cleaning solution from the lumen by pushing it back through the membrane wall. This cycle can be repeated multiple times so that the chemical cleaning solution is alternately moved from one side of the membrane to the other through the membrane wall.

Each of the above chemical cleaning methods has been found to provide a more efficient chemical backwash. The methods allow for a minimal use of chemical cleaning solution while also enabling an enhanced washing process by providing a more efficient distribution of the chemical cleaning solution within the system. Desirably, these backwashes or cleans are performed on an intermittent basis.

Using the methods described the reverse flow cleaning step can be accomplished in such a way as to allow the transmembrane pressure (TMP) to be controlled by the gas pressure and to apply this TMP evenly along the membrane, even at the extremities from the lumen inlet. This ensures all areas of the membrane are contacted with chemical cleaning solution and that they are back-flushed with the same applied TMP. It also allows the chemical in the lumens to be fully drained by the end of the reverse flow step, which aids in recovery of chemical cleaning solution, reduces flushing requirements, and reduces cleaning downtime.

In one preferred form, the gas may be pulsed in its application to the membrane lumens. In one alternate form of the chemical solution backwash described above, the backwash is performed with the vessel empty.

The process can be applied to membranes submerged in an open vessel as well as pressurized membrane filtration systems.

### BRIEF DESCRIPTION OF THE DRAWINGS

Preferred embodiments of the invention will now be described, by way of example only, with reference to the accompanying drawings in which:
Figure 1a shows a graph of transmembrane pressure (TMP) vs position along the membrane bundle of the membrane module configuration shown in Figure 1b ;
Figure 1b shows a simplified sectional side elevation of a membrane module immersed in a feed liquid with pressurized liquid applied to the membrane lumens ;
Figure 2a shows a graph of transmembrane pressure (TMP) vs position along the membrane bundle of the membrane module configuration shown in Figure 2b;
Figure 2b shows a simplified sectional side elevation of a membrane module immersed in a feed liquid with pressurized gas applied to the membrane lumens ;
Figure 3a shows a graph of transmembrane pressure (TMP) vs position along the membrane bundle of the membrane module configuration shown in Figure 3b;
Figure 3b shows a simplified sectional side elevation of a membrane module immersed in a feed liquid with pressurized gas applied to liquid filled membrane lumens ;
Figure 3c shows an enlarged sectional view of the membranes in the indicated region of Figure 3b;
Figure 4a shows a simplified sectional side elevation of a membrane module with the feed liquid drained from around the module ;
Figure 4b shows an enlarged sectional view of the membranes in the indicated region of Figure 4b;
Figure 5a shows a simplified sectional side elevation of a membrane module with a lower portion of the module immersed in a chemical cleaning solution and suction applied to the membrane lumens ;
Figure 5b shows an enlarged sectional view of the membranes in the indicated region of Figure 5a;
Figure 5c shows an enlarged sectional view of the membranes in the indicated region of Figure 5a;
Figure 6a shows a simplified sectional side elevation of a membrane module with a lower portion of the module immersed in a chemical cleaning solution and pressurized gas applied to the membrane lumens ; and
Figure 6b shows an enlarged sectional view of the membranes in the indicated region of Figure 6a.

### DESCRIPTION OF PREFERRED EMBODIMENTS

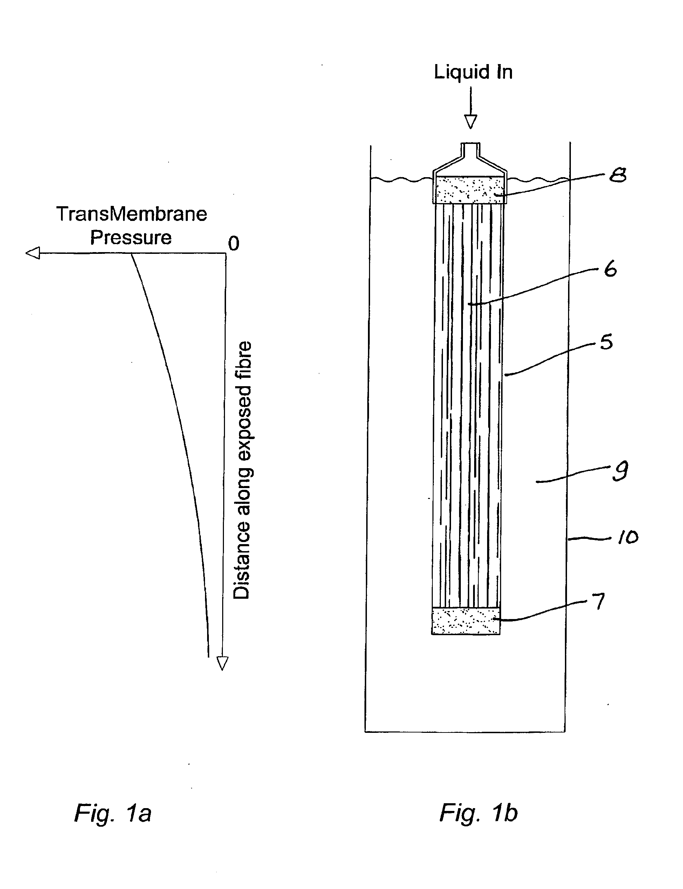

Referring to Figures 1 a and 1b, the graph shown in Figure 1a illustrates the change in transmembrane pressure (TMP) as the distance from the application of pressure flow increases. Figure 1b shows a membrane module 5 having a plurality of hollow fibre membranes 6. The fibre membranes 6 are closed at the lower end in a lower pot 7 and open at the upper end through upper pot 8. The module is immersed in liquid 9 contained in a vessel 10. In the case illustrated, pressurized liquid is applied to the open end of the fibre lumens 11 resulting in the TMP profile shown in Figure 1a.

As noted above, in membranes with the fibre membranes 6 closed at one end, the pressure of liquid is highest at the point of application of the pressurized flow to the fibres lumens 11 and tapers off along the length of the membrane 6. This results in uneven backwashing and poor recovery of TMP at portions of the fibre membranes 6 remote from the backwash application point.

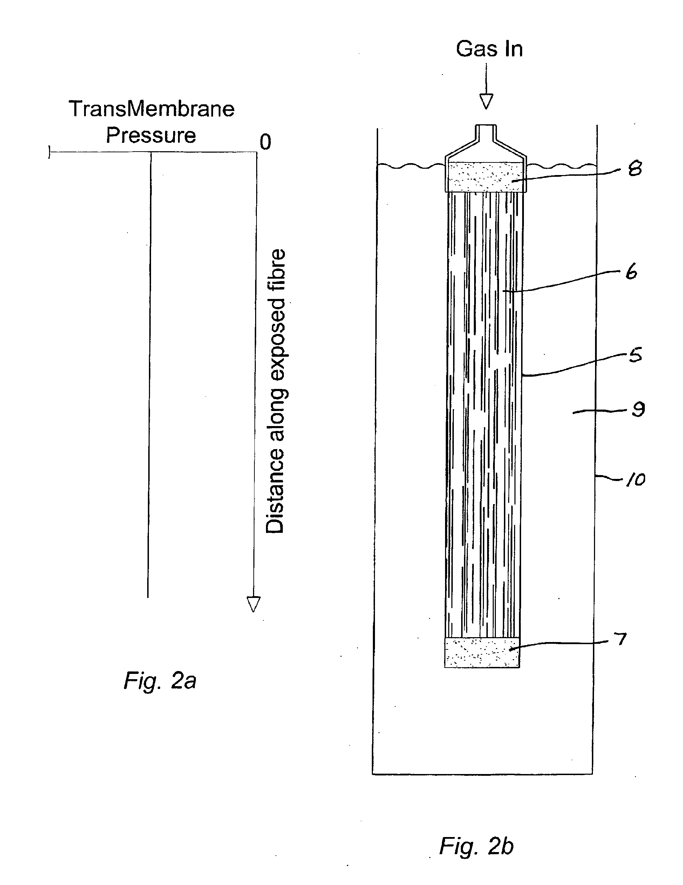

Figures 2a and 2b show a similar arrangement to Figure 1 but in this case pressurized gas is applied to the fibre membrane lumens 11 resulting in an even distribution of TMP along the length of the fibre membranes 6.

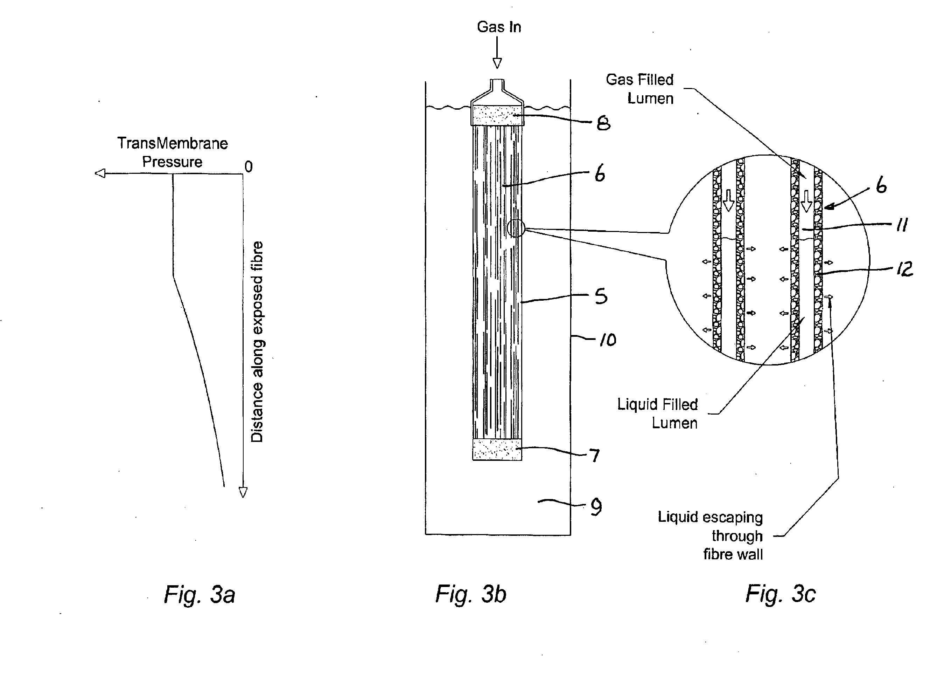

Figures 3a to 3c illustrates pressurized gas applied at a pressure below the bubble point to liquid filled fibre membrane lumens 11. As best shown in Figure 3c as the liquid is displaced through the membrane wall 12, the lumen 11 becomes filled with gas resulting in a maximum TMP being applied along the length of the fibre membrane 6 as the liquid level within the fibre membrane lumen 11 drops.

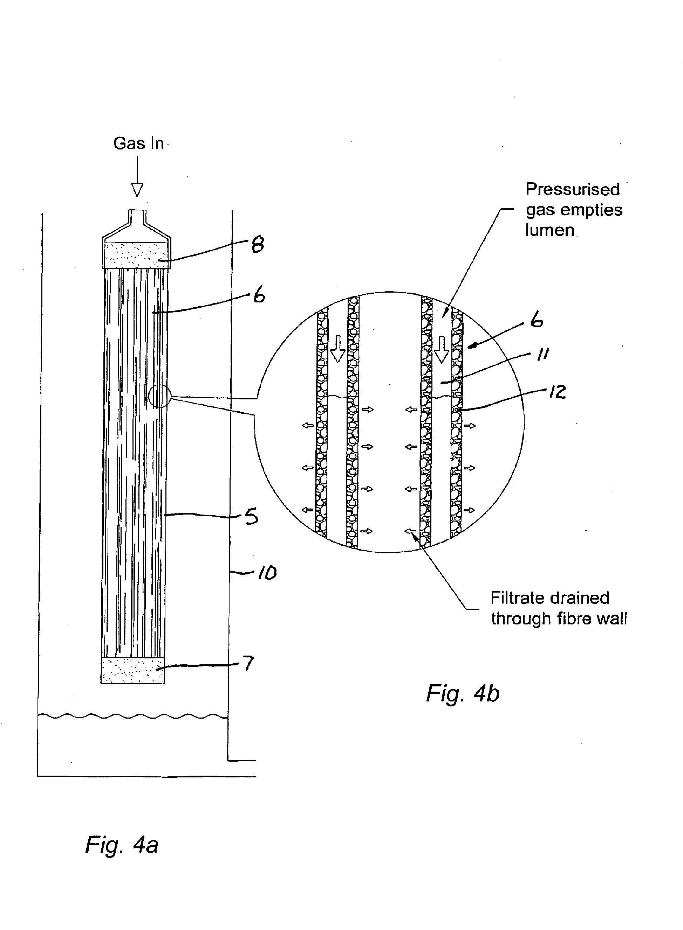

Figure 4a and 4b illustrates liquid being drained from around the membrane module 5 before the backwashing process is commenced. The backwashing process is similar to that described above for Figure 3.

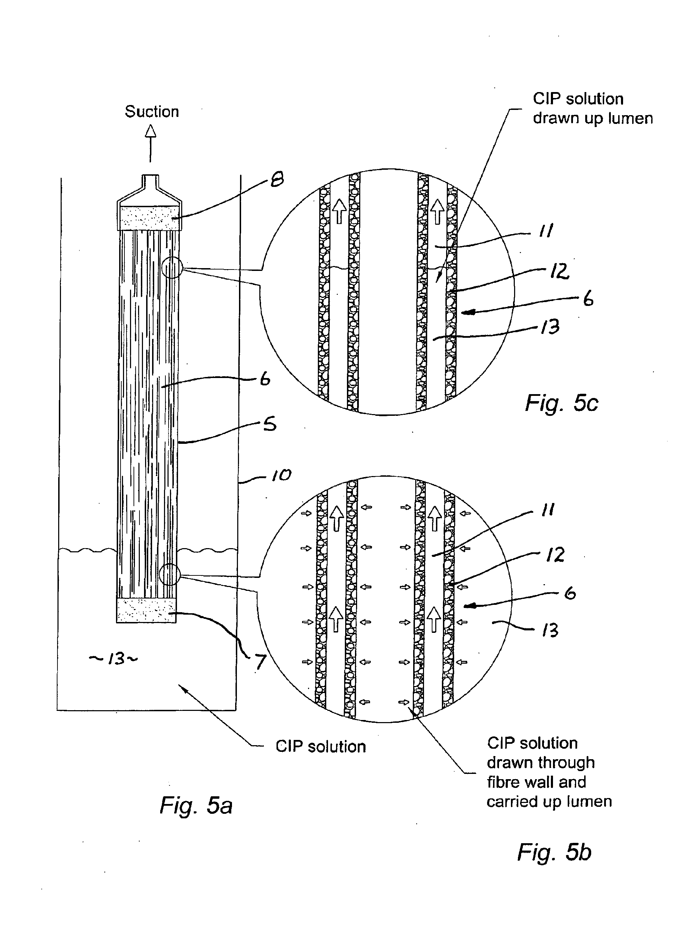

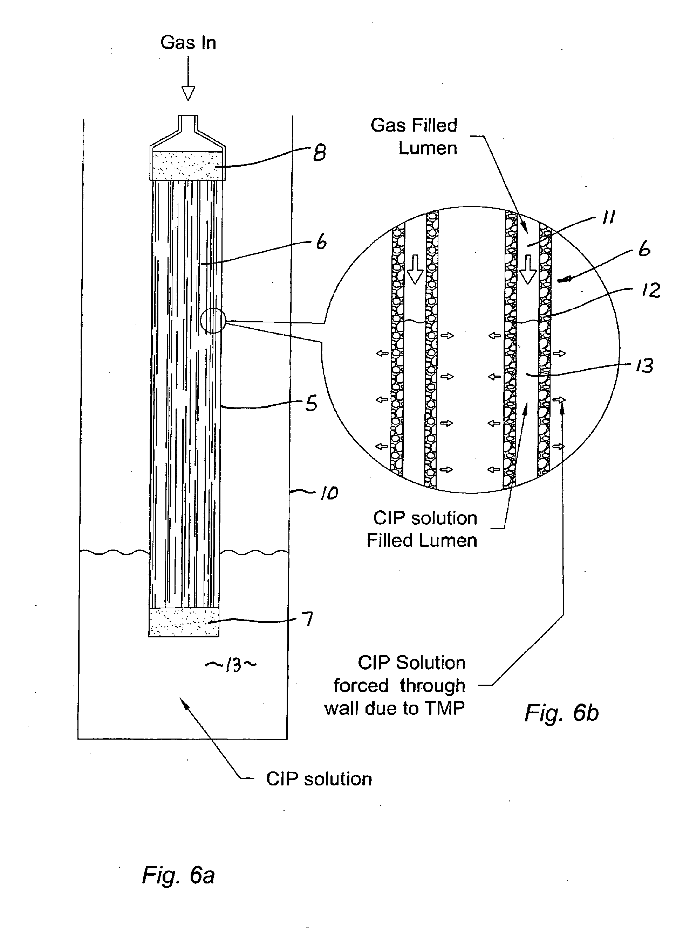

Referring to Figures 5 and 6, one embodiment of the cleaning process according to the invention is illustrated. The membrane module 5 is immersed at least partially in chemical cleaning solution 13 and suction is applied to the open ends of the fibre membrane lumens 11. As best shown in figure 5b, the cleaning solution 13 is drawn through the membrane wall 12 and into the fibre membrane lumen 11. The cleaning solution 13 is then drawn up through the lumen 11 until it is completely filled as shown in Figure 5c. As shown in Figures 6a and 6b, pressurized gas is then applied to the cleaning solution filling the membrane lumen 11 and displaced through the membrane wall 12 as previously described. This flow of cleaning solution to and from the membrane lumens 11 as well as along their length results in an effective chemical clean of the membrane module 5.

The invention may be embodied in a similar apparatus to that described in the aforementioned International Application No. WO93/02779 appropriately modified to operate in accordance with the inventive method.

## Claims

1. A method of concentrating the solids of a liquid suspension comprising:
(i) providing a pressure differential across the walls of permeable, hollow membranes immersed in the liquid suspension, said liquid suspension being applied to the outer surface of the porous hollow membranes to induce and sustain filtration through the membrane walls wherein:
(a) some of the liquid suspension passes through the walls of the membranes to be drawn off as clarified liquid or filtrate from the hollow membrane lumens, and
(b) at least some of the solids are retained on or in the hollow membranes or otherwise as suspended solids within the liquid surrounding the membranes.
(ii) periodically backwashing the membrane pores using the filtrate by applying a gas at a pressure below the bubble point to the membrane lumens to progressively displace at least some of liquid filtrate within the lumens through the membrane pores resulting in removal of the solids retained on or in the hollow membranes into the bulk liquid surrounding the membranes;
wherein the backwashing step includes the use of a chemical cleaning solution instead of the filtrate comprising filtering the chemical cleaning solution from the outer surface of the porous hollow membranes into the membrane lumens and then displacing said chemical cleaning solution back through the membrane pores by application of said gas;
the method further includes the step of removing at least part of the bulk liquid surrounding the membranes prior to the backwashing step; and,
the step of removing at least part of the liquid remaining in the membrane lumens prior to displacing chemical cleaning solution into the membrane lumens.

2. A method of concentrating the solids of a liquid suspension according to claim 1 wherein said method is carried out as a continuous process utilizing the repetitive cycle of solid accumulation and solid displacement or removal.

3. A method of concentrating the solids of a liquid suspension according to claim 1 or 2 including the step of applying the chemical cleaning solution under pressure to the outer surface of the porous hollow membranes to displace chemical cleaning solution through the membrane pores into the membrane lumens and then displacing said chemical cleaning solution back through the membrane pores by application of said gas.

4. A method of concentrating the solids of a liquid suspension according to any one of the preceding claims wherein the gas is pulsed in its application to the membrane lumens.

## Patentansprüche

1. Ein Verfahren des Konzentrierens der Feststoffe einer flüssigen Suspension, Folgendes beinhaltend:
(i) Bereitstellen einer Druckdifferenz über die Wände durchlässiger, hohler in die flüssige Suspension eingetauchter Membranen, wobei die flüssige Suspension auf die äußere Oberfläche der porösen hohlen Membranen angewandt wird, um Filtration durch die Membranwände herbeizuführen und aufrechtzuerhalten, wobei:
(a) ein Anteil der flüssigen Suspension durch die Wände der Membranen geht, um als gereinigte Flüssigkeit oder Filtrat aus den hohlen Membranlumen abgezogen zu werden, und
(b) mindestens ein Anteil der Feststoffe auf oder in den hohlen Membranen oder anderweitig als suspendierte Feststoffe innerhalb der die Membranen umgebenden Flüssigkeit gehalten werden,
(ii) periodisches Rückspülen der Membranporen unter Verwendung des Filtrats durch Anwenden eines Gases bei einem Druck unter dem Blasenpunkt auf die Membranlumen, um stufenweise mindestens einen Anteil des Flüssigkeitsfiltrats innerhalb des Lumens durch die Membranporen zu verschieben, was in dem Entfernen der auf oder in den hohlen Membranen gehaltenen Feststoffe in den die Membranen umgebenden Flüssigkeitskörper resultiert;
wobei der Rückspülschritt die Verwendung einer chemischen Reinigungslösung statt des Filtrats umfasst und das Filtern der chemischen Reinigungslösung von der äußeren Oberfläche der porösen hohlen Membranen in die Membranlumen und dann das Verschieben der chemischen Reinigungslösung zurück durch die Membranporen durch Anwendung des Gases beinhaltet;
das Verfahren umfasst ferner den Schritt des Entfernens mindestens eines Teils des die Membranen umgebenden Flüssigkeitskörpers vor dem Rückspülschritt; und den Schritt des Entfernens mindestens eines Teils der in den Membranlumen verbleibenden Flüssigkeit vor dem Verschieben der chemischen Reinigungslösung in die Membranlumen.

2. Verfahren des Konzentrierens der Feststoffe einer flüssigen Suspension gemäß Anspruch 1, wobei das Verfahren als ein kontinuierlicher Prozess unter Benutzung des sich wiederholenden Zyklus von Feststoffakkumulation und Feststoffverschiebung oder -entfernung ausgeführt wird.

3. Verfahren des Konzentrierens der Feststoffe einer flüssigen Suspension gemäß Anspruch 1 oder 2, das den Schritt des Anwendens der chemischen Reinigungslösung unter Druck auf die äußere Oberfläche der porösen hohlen Membranen umfasst, um chemische Reinigungslösung durch die Membranporen in die Membranlumen zu verschieben und dann die chemische Reinigungslösung durch Anwendung des Gases zurück durch die Membranporen zu verschieben.

4. Verfahren des Konzentrierens der Feststoffe einer flüssigen Suspension gemäß einem der vorhergehenden Ansprüche, wobei das Gas bei seiner Anwendung auf die Membranlumen gepulst wird.

## Revendications

1. Une méthode pour concentrer les matières solides d'une suspension liquide comprenant le fait de :
(i) fournir une différence de pression de part et d'autre des parois de membranes creuses perméables immergées dans la suspension liquide, ladite suspension liquide étant appliquée sur la surface externe des membranes creuses poreuses pour induire et soutenir la filtration à travers les parois de membranes dans laquelle :
(a) une partie de la suspension liquide passe à travers les parois des membranes pour être soutirée sous forme de liquide ou de filtrat clarifié des lumières de membranes creuses, et
(b) au moins certaines des matières solides sont retenues sur ou dans les membranes creuses ou autrement sous forme de matières solides en suspension au sein du liquide entourant les membranes,
(ii) laver à contre-courant périodiquement les pores de membranes à l'aide du filtrat en appliquant un gaz à une pression inférieure au point de bulle sur les lumières de membranes de façon à déplacer progressivement au moins une partie du filtrat liquide au sein des lumières pour lui faire traverser les pores de membranes avec pour résultat que les matières solides retenues sur ou dans les membranes creuses sont retirées et amenées dans le volume de liquide entourant les membranes ;
dans laquelle l'étape de lavage à contre-courant comporte l'utilisation d'une solution de nettoyage chimique à la place du filtrat comprenant le fait de filtrer la solution de nettoyage chimique de la surface externe des membranes creuses poreuses pour l'amener dans les lumières de membranes et ensuite de déplacer ladite solution de nettoyage chimique pour lui faire retraverser les pores de membranes grâce à l'application dudit gaz ;
la méthode comporte de surcroît l'étape de retrait d'au moins une partie du volume de liquide entourant les membranes avant l'étape de lavage à contre-courant ; et,
l'étape de retrait d'au moins une partie du liquide restant dans les lumières de membranes avant de déplacer la solution de nettoyage chimique pour l'amener dans les lumières de membranes.

2. Une méthode pour concentrer les matières solides d'une suspension liquide selon la revendication 1 dans laquelle ladite méthode est réalisée sous forme de procédé continu faisant usage du cycle répétitif d'accumulation de matières solides et de déplacement ou de retrait de matières solides.

3. Une méthode pour concentrer les matières solides d'une suspension liquide selon la revendication 1 ou la revendication 2 comportant l'étape consistant à appliquer la solution de nettoyage chimique sous pression sur la surface externe des membranes creuses poreuses de façon à déplacer la solution de nettoyage chimique pour lui faire traverser les pores de membranes et l'amener dans les lumières de membranes et ensuite à déplacer ladite la solution de nettoyage chimique pour lui faire retraverser les pores de membranes grâce à l'application dudit gaz.

4. Une méthode pour concentrer les matières solides d'une suspension liquide selon l'une quelconque des revendications précédentes dans laquelle le gaz est pulsé lors de son application sur les lumières de membranes.
